# EUROPÄISCHE PATENTSCHRIFT

(11) **EP 2 785 820 B1**
(45) Veröffentlichungstag und Bekanntmachung des Hinweises auf die Patenterteilung: **23.05.2018**
(21) Anmeldenummer: 12823238.6
(22) Anmeldetag: 30.11.2012
(51) Int. Cl.: C10L 9/08

(54) **VORRICHTUNG ZUR HYDROTHERMALEN KARBONISIERUNG VON BIOMASSE**
DEVICE FOR THE HYDROTHERMAL CARBONIZATION OF BIOMASS
DISPOSITIF DE CARBONISATION HYDROTHERMALE DE BIOMASSE

(30) Priorität: 02.12.2011 DE 102011055990
(43) Veröffentlichungstag der Anmeldung: 08.10.2014
(73) Patentinhaber: Reichhart, Thomas, 92551 Stulln (DE)
(72) Erfinder: Reichhart, Thomas, 92551 Stulln (DE)
(74) Vertreter: Glück Kritzenberger Patentanwälte PartGmbB
(86) Internationale Anmeldenummer: PCT/DE2012/100366
(87) Internationale Veröffentlichungsnummer: WO 2013/079063

(56) Entgegenhaltungen:
- EP-A1- 2 075 057
- DE-A1-102008 004 732
- DE-A1-102008 028 953
- DE-A1-102009 055 976
- US-A1- 2008 006 518

## Beschreibung

Die Erfindung betrifft eine Vorrichtung zur hydrothermalen Karbonisierung von Biomasse gemäß dem Oberbegriff des Patentanspruchs 1.

Unter Biomasse werden im Sinne der Erfindung sämtliche nachwachsenden Rohstoffe, d.h. pflanzliche Biomasse sowie davon abgeleitete tierische Biomasse und deren Stoffwechselprodukte verstanden, also beispielsweise Grüngut, Hackschnitzel, Pflanzen- und Pflanzenreste, Stroh, Silage, Reststoffe aus der Landwirtschaft, Papier- bzw. Klärschlämme etc..

Verfahren und Vorrichtungen zur hydrothermalen Karbonisierung von Biomasse sind aus dem Stand der Technik bereits bekannt. Die hydrothermale Karbonisierung bildet den natürlichen Entstehungsprozess von Braunkohle nach. Dabei wird Biomasse als Ausgangsstoff in einem Reaktor unter einem Druck im Bereich zwischen 10 bar und 35 bar und Temperaturen im Bereich zwischen 180°C und 240°C dehydratisiert und karbonisiert, wobei am Reaktorausgang dann ein Kohleschlamm entnommen werden kann. In diesem Kohleschlamm sind Kohlepartikel enthalten, die durch einen Trocknungs- und/oder Entwässerungsprozess dem Kohleschlamm entzogen werden können. Diese nach dem Trocknungs- und/oder Entwässerungsprozess erhaltenen Kohlepartikel ergeben einen Kohlestaub, der nahezu den gesamten Kohlenstoff der verarbeiteten Biomasse enthält und einen Brennwert im Wesentlichen gleich dem Brennwert von fossiler Braunkohle aufweist.

Die hydrothermale Karbonisierung ist eine exotherme Reaktion, d.h. beim Dehydratations- und Karbonisierungsprozess wird Reaktionsenergie in Form von Wärme freigesetzt.

Des Weiteren ist es bekannt, die hydrothermale Karbonisierung kontinuierlich oder quasikontinuierlich in einem Durchlaufverfahren zu vollziehen, wobei der Karbonisierungsprozess im Reaktorinnenraum während des Einbringens von neuer, zu karbonisierender Biomasse bzw. während der Entnahme des Kohlenschlamms aufrechterhalten wird. Dabei ist es nötig, zum einen den Reaktordruck, zum anderen die Temperatur im Reaktorinnenraum während des Einbringens der neu zu verarbeitenden Biomasse bzw. der Entnahme des Kohlenschlamms mit möglichst geringen Druck- und Temperaturschwankungen aufrechtzuerhalten.

Um durch das Einbringen neuer Biomasse keinen erheblichen Temperaturabfall im Reaktor hervorzurufen, ist es bekannt, aus dem Reaktorinnenraum Wasserdampf zu entnehmen und diesen Wasserdampf zur Vorwärmung der Biomasse zu verwenden.

Zum einen beim Hochfahren des Karbonisierungsprozesses, zum anderen bei der Verwendung von Biomasse mit einem geringen Trockengehalt ist es nötig, die Reaktortemperatur durch Aufheizen in einem gewünschten Temperaturbereich zu halten um den Karbonisierungsprozess erst zu ermöglichen. Ferner ist eine Regelung der Reaktortemperatur auch für die Güte bzw. den Brennwert der entstehenden Kohlepartikel entscheidend.

Die DE 10 2008 004 732 A1 beschreibt ein Verfahren zur hydrothermalen Karbonisierung von Biomasse, wobei die Biomasse mit Wasser und wenigstens einem Katalysator in einem Druckbehälter durch Temperatur- und/oder Druckerhöhung in Stoffe wie Kohle, Öl und artverwandte Stoffe umgewandelt wird. Die Biomasse wird dabei vor der Umwandlung oder während der Umwandlung disorganisiert. Bei dem Durchlaufverfahren wird die Biomasse durch eine Fördereinrichtung einem Reaktor zugeführt, in dem die Dehydratisierung und Karbonisierung der Biomasse erfolgt. Der Reaktor ist aus mehreren Druckbehältern aufgebaut, wobei die einzelnen Druckbehälter über Absperrorgane miteinander verbunden sind.

Aus der DE 10 2009 055 976 A1 ist eine Vorrichtung bekannt, die eine Aufbereitungsanlage, eine Überführungsvorrichtung und eine Flugstrom-Vergasungsanlage umfasst. Mit Hilfe der Vorrichtung wird ein Synthesegas aus Biomasse durch Flugstromvergasung zu erzeugt. Dabei wird die Biomasse in der Aufbereitungsanlage einer Grobzerkleinerungsvorrichtung zugeführt, die stromabwärts über eine erste Schleuse mit einer druckbeaufschlagten Karbonisierungsanlage zur hydrothermalen Erzeugung von Karbonisierungskohle aus der Biomasse verbunden ist. Die Karbonisierungsanlage umfasst eine Vorwärmvorrichtung und einen stromabwärts der Vorwärmvorrichtung angeordneten Karbonisierungsreaktor, und ist stromabwärts über eine zweite Schleuse mit zumindest einer Fest-Flüssig-Trennvorrichtung zur Bereitstellung eines Brennstoffs verbunden.

Ausgehend hiervon ist es Aufgabe der Erfindung eine Vorrichtung zur hydrothermalen Karbonisierung von Biomasse im Durchlaufverfahren aufzuzeigen, die eine kostengünstige, effiziente und Aufheizung bzw. Temperaturregelung der Reaktortemperatur ermöglicht.

Die Aufgabe wird ausgehend vom Oberbegriff des unabhängigen Patentanspruchs 1 durch dessen kennzeichnende Merkmale gelöst.

Die vorliegende Erfindung betrifft eine Vorrichtung zur hydrothermalen Karbonisierung von Biomasse im Durchlauf, bei der die Biomasse mittels einer Fördereinrichtung zu einer Vorwärmeinrichtung transportiert wird, in der die Biomasse erwärmt wird. Des Weiteren weist die Vorrichtung zumindest einen Reaktor auf, in dem die Biomasse dehydratisiert und karbonisiert wird. Der wesentliche Aspekt der Vorrichtung besteht darin, der Reaktor einen Wärmetauscher enthält, der zur Durchleitung von Rauchgasen oder Dämpfen ausgebildet ist. Damit kann die Abwärme von in Industrieanlagen oder Verbrennungsprozessen entstehenden Rauchgasen oder Dämpfen zur Temperaturstabilisierung des zumindest einen Reaktors verwendet werden. Der Wärmetauscher ist hierbei in dem die Biomasse aufnehmenden Innenraum des Reaktors angeordnet.

Bei dem Wärmetauscher handelt es sich um einen Rohrwärmetauscher, der beispielsweise mit einer automatisierten Reinigungseinrichtung zur Entfernung von aus der Durchleitung von Rauchgasen entstehenden Abgasrückständen ausgebildet ist. Die Rauchgase können hierbei beispielsweise aus einer Biomasseverbrennung in einem Biomasseofen, aus einem Abgasstrom eines Blockheizkraftwerks etc. stammen. Besonders bevorzugt wird der Rauchgasstrom durch Beimischung eines Anteils von Kalt- bzw. Frischluft in der Temperatur derart gesteuert, dass ein erforderlicher, gesteuerter Wärmeeintrag in den Reaktorinnenraum bzw. die dort enthaltene Biomasse bzw. Flüssigkeit erfolgt.

Bei einem Verfahren unter Einsatz einer erfindungsgemäßen Vorrichtung wird Biomasse durch eine Fördereinrichtung einer Vorwärmeinrichtung zugeführt, in der die Biomasse erwärmt wird, die erwärmte Biomasse wird zumindest einem Reaktor zugeführt, in dem die Biomasse dehydratisiert und karbonisiert wird und der durch die Karbonisierung entstehende Kohleschlamm wird aus dem Reaktor entnommen. Der zumindest eine Reaktor wird durch eine Durchleitung von Gasen oder Dämpfen aufgeheizt und/oder temperaturstabilisiert. Eine Aufheizung bzw. Temperaturstabilisierung des Reaktors mittels Gasen oder Dämpfen bietet den entscheidenden Vorteil, dass derartige Gase oder Dämpfe mit Temperaturen größer als 180°C beispielsweise im industriellen Bereich, bei Verbrennungsanlagen etc. in der Regel zur Verfügung stehen und die in den Dämpfen oder Gasen enthaltene Abwärme oft nicht genutzt wird. Diese in den Gasen oder Dämpfen enthaltene Abwärme kann zur Erwärmung des zumindest einen Reaktors ausgenutzt werden.

Als Gase werden Rauchgase aus einem Verbrennungsprozess oder Wasserdampf verwendet. Derartige Rauchgase können insbesondere aus einem Biomasseofen oder einem Blockheizkraftwerk stammen. Insbesondere kann die Aufheizung bzw. Temperaturstabilisierung durch ein Verbrennen der durch das Karbonisierungsverfahren erzeugten Kohle und die Ausnutzung der im Rauchgas enthaltenen Abwärme erreicht werden. Damit wird die Öko-Bilanz des erfindungsgemäßen Verfahrens entscheidend verbessert, da die Aufheizung bzw. Temperaturstabilisierung des Reaktors nicht über fossile Brennstoffe erfolgen muss.

Zur Temperatursteuerung des Rauchgases oder Dampfes können Mischeinrichtungen vorgesehen sein, die eine gesteuerte Beimischung eines gewünschten Anteils an Frisch- bzw. Kaltluft zu dem Rauchgas bzw. Dampf ermöglichen. Dadurch kann die Temperatur des Rauchgases oder Dampfes und damit der Wärmeeintrag in den Reaktorinnenraum durch den beigefügten Anteil an Frisch- bzw. Kaltluft gesteuert werden.

Die Gase oder Dämpfe werden durch zumindest einen im Innenraum des Reaktors vorgesehenen Wärmetauscher geleitet. Der Wärmetauscher ist damit unmittelbar von dem zu erwärmenden bzw. zu temperierenden Biomasse-Flüssigkeits-Gemisch umgeben, so dass bei Durchleitung von Rauchgas oder Dampf durch den Wärmetauscher ein direkter Wärmeaustausch über die Wärmetauscherwandung erfolgt.

Der Wärmetauscher ist als Rohrwärmetauscher mit mehreren vorzugsweise senkrecht verlaufenden Rohrelementen ausgebildet. Weiterhin vorzugsweise sind im vom Rauchgas oder Dampf durchströmten Innenraum eine Reinigungseinrichtung vorgesehen, um Ablagerungen an den Innenwänden des Wärmetauschers zu entfernen, die eine Reduzierung der Wärmeabgabe an das Biomasse-Flüssigkeits-Gemisch verursachen würden. Insbesondere ist diese Reinigungseinrichtung eine getaktete Reinigungseinrichtung, die eine automatisierte Entfernung von Ablagerungen, insbesondere Rauchgasrückständen ermöglicht.

Besonders bevorzugt ist in die Rauchgasleitungen, die eine Ableitung des Rauchgases oder Dampfes aus den Reaktoren bewirken, ein weiterer Wärmetauscher eingebracht, mittels dem eine Restwärmeausnutzung des im Rauchgas oder Dampf enthaltenen Wärmeenergie bewirkt wird. Dadurch kann die Effizienz der Anlage weiter gesteigert werden.

In einem Verfahren unter Einsatz einer erfindungsgemäßen Vorrichtung wird besonders bevorzugt dem zumindest einen Reaktor durch die Dehydratation entstehendes Dehydratwasser im flüssigen Zustand entnommen, das Dehydratwasser unmittelbar der Vorwärmeinrichtung zugeführt und in der Vorwärmeinrichtung mit der Biomasse vermischt. Aufgrund der Tatsache, dass Wasser im flüssigen Zustand im Vergleich zu Wasserdampf eine größere Menge an Wärmeenergie pro Volumeneinheit aufweist, wird durch die Entnahme eines definierten Volumens von Dehydratwasser im flüssigen Zustand aus dem Reaktor eine größere Menge an Wärmeenergie der Vorwärmeinrichtung zugeführt als bei der Entnahme desselben Volumens an Wasserdampf. Damit muss zur Erzielung eines bestimmten Wärmeeintrags in die Biomasse ein im Vergleich zur Verwendung von Wasserdampf geringeres Volumen an Dehydratwasser entnommen werden, sodass der sich dort vollziehende Karbonisierungsprozess nur geringfügig beeinträchtigt wird. Insbesondere bei Verwendung von Biomasse mit einem hohen Trockengehalt wird durch die Durchmischung der Biomasse mit dem Dehydratwasser eine verbesserte, gleichmäßigere Vorwärmung der Biomasse im Vergleich zu herkömmlich verwendeten Wärmetauschersystemen erreicht, da die Wärmetauscher bei der Verwendung relativ trockener Biomasse, insbesondere Biomasse mit einem Trockengehalt größer als 20% zur Verkrustung an den Wärmeübertragungsflächen neigen und dadurch der Wirkungsgrad der Wärmetauscher abnehmen.

Unter der unmittelbaren Zuführung des Dehydratwassers zur Vorwärmeinrichtung wird eine Zuführung beispielsweise mittels Rohrleitungen ohne weitere Vorrichtungen, insbesondere Verdampfer zum Entspannen des Wassers, verstanden. Unter unmittelbarer Zuführung ist jedoch auch eine Rohrleitung oder ein Rohrleitungssystem enthaltend zumindest eine Sperreinrichtung, insbesondere ein Ventil zum Verschluss der Vorwärmeinrichtung und/oder des Reaktors zu verstehen.

Das der Vorwärmeinrichtung zugeführte Dehydratwasser weist eine Temperatur gleich oder im Wesentlichen gleich der Temperatur des Biomasse-Wasser-Gemischs im Reaktor auf. Damit wird eine hohe Wärmemenge der zu erwärmenden Biomasse zugeführt. Aufgrund des hohen Drucks des dem Reaktor entnommenen Dehydratwassers wird vorzugsweise eine Vorwärmeinrichtung in Form einer druckverschließbaren Kammer verwendet, so dass die Entspannung des Dehydratwassers in der Vorwärmeinrichtung erfolgen kann.

Weiterhin bevorzugt erfolgt die Entnahme des Dehydratwassers aus dem zumindest einen Reaktor in Abhängigkeit des Volumenstroms der Biomassezuführung und/oder der Reaktortemperatur im Inneren des Reaktors und/oder dem Reaktordruck im Inneren des Reaktors. Eine derart gesteuerte Entnahme des Dehydratwassers bewirkt einen möglichst homogenen Karbonisierungsprozess im Reaktorinnenraum, wobei die die Karbonisierung bewirkenden Prozessparameter, insbesondere der Druck und die Temperatur im Reaktorinnenraum durch die gesteuerte Entnahme des Dehydratwassers nahezu konstant gehalten werden können.

In einem Verfahren unter Einsatz einer erfindungsgemäßen Vorrichtung kann vor dem Einbringen der Biomasse in den Reaktor der Druck in der Vorwärmeinrichtung auf einen Druck zumindest gleich dem Druck im Reaktor erhöht werden. Durch eine derartige Druckerhöhung in der Vorwärmeinrichtung kann eine Pumpeinrichtung entfallen, die einen Übertrag der vorwärmten Biomasse aus der Vorwärmeinrichtung in den Reaktorinnenraum bewirkt. Es kann vielmehr ein Übertrag erfolgen, der lediglich durch die Schwerkrafteinwirkung auf die Biomasse bzw. das Gemisch aus Biomasse und Dehydratwasser erfolgt, d.h. die Biomasse bzw. das genannte Biomassegemisch wird aus der oberhalb des Reaktors angeordneten Vorwärmeinrichtung in den Reaktorinnenraum fallen gelassen. Alternativ ist es möglich, den Druck in der Vorwärmeinrichtung über den Druck im Reaktorinnenraum zu erhöhen, sodass ein durch den Überdruck bewirkter Übertrag von der Vorwärmeinrichtung in den Reaktorinnenraum erfolgt. Durch einen derartigen Überdruck in der Vorwärmeinrichtung wird eine Verstopfung des Auslasses der Vorwärmeinrichtung bzw. des Einlasses des Reaktors wirksam vermieden.

Bevorzugt kann der Dehydratations- und/oder Karbonisierungsprozess in mehreren Prozessstufen erfolgen, wobei die einzelnen Prozessstufen zumindest teilweise in unterschiedlichen, in Reihe miteinander verbundenen Reaktoren vollzogen werden. Eine derartige Kaskadierung von Reaktoren bewirkt, dass der Durchsatz der zu verarbeitenden Biomasse erhöht werden kann, ohne dass Reaktoren mit einer zu großen Reaktorhöhe verwendet werden müssen. Nach dem Vollzug einer ersten Prozessstufe in einem ersten Reaktor wird das dort enthaltene Biomasse-Flüssigkeitsgemisch an den zumindest einen weiteren Reaktor übertragen und dort zumindest eine weitere Prozessstufe des Karbonisierungsprozesses vollzogen. Die Entnahme des durch den Karbonisierungsprozess entstehenden Kohleschlamms erfolgt aus dem Auslass des letzten Reaktors der Reaktorkaskade.

Besonders bevorzugt erfolgt bei der Verwendung mehrerer Reaktoren bzw. einer Reaktorkaskade der Übertrag des Biomasse-Flüssigkeitsgemischs von einem Reaktor auf den nächstfolgenden Reaktor durch einen bestehenden Druckunterschied in den Reaktorinnenräumen. Dadurch können Pumpeinrichtungen vermieden werden, die durch möglicherweise in der Biomasse enthaltene Fremdstoffe fehleranfällig sind. Besonders bevorzugt ist in der an den Auslass des Reaktors anschließenden Austragsleitung, mittels der der Kohleschlamm aus dem Reaktor ausgeleitet wird, ebenfalls ein Wärmetauscher vorgesehen, mittels dem dem heißen Kohleschlamm Wärmeenergie entzogen wird, die vorzugsweise einem Wärmespeicher zugeführt wird. Damit kann wiederum eine Effizienzsteigerung erzielt werden.

Besonders bevorzugt ist in der Austragsleitung für den Kohleschlamm eine Filtereinrichtung, insbesondere ein Kantenspaltfilter vorgesehen, mittels dem Fremdstoffe im Kohleschlamm ausgefiltert werden können. Derartige Fremdstoffe können beispielsweise Kunststoffe sein, die durch die Hitzeeinwirkung im Reaktor verklumpen und durch die Filtereinrichtung einfach und kostengünstig ausgefiltert werden können.

Weiterhin vorzugsweise ist in die Rauchgasleitungen, die eine Ableitung des Rauchgases oder Dampfes aus den Reaktoren bewirken, ein weiterer Wärmetauscher eingebracht, mittels dem eine Restwärmeausnutzung des im Rauchgas oder Dampf enthaltenen Wärmeenergie bewirkt wird. Dadurch kann die Energieeffizienz der Vorrichtung weiter gesteigert werden.

In einem besonders bevorzugten Ausführungsbeispiel ist am Reaktor eine Entnahmeeinrichtung für durch die Dehydratation entstehendes Dehydratwasser vorgesehen, wobei die Entnahmeeinrichtung über eine unmittelbare Fluidverbindung mit der Vorwärmeinrichtung gekoppelt ist. Dadurch kann Dehydratwasser im flüssigen Zustand der Vorwärmeinrichtung zugeführt und ein Wärmeeintrag in die in der Vorwärmeinrichtung enthaltende Biomasse erfolgen. Die Verwendung von Dehydratwasser im Flüssigzustand birgt den wesentlichen Vorteil, dass Wasser im flüssigen Zustand eine hohe spezifische Masse im Vergleich zu Wasserdampf aufweist und damit der Wärmeeintrag pro entnommener Volumeneinheit von Dehydratwasser im flüssigen Zustand größer ist als der Wärmeeintrag resultierend aus der gleichen Volumeneinheit Wasserdampf und damit zur Erreichung eines definierten Wärmeeintrags in die Biomasse ein vergleichsweise geringes Volumen Dehydratwasser entnommen werden muss.

In einem bevorzugten Ausführungsbeispiel ist die Vorwärmeinrichtung durch eine druckdicht verschließbare Kammer gebildet. Dadurch kann das unter Druck stehende Dehydratwasser ohne vorherige Entspannung der Vorwärmeinrichtung zugeführt werden, wobei durch diese Zuführung der Druck in der Vorwärmeinrichtung erhöht wird. Vorzugsweise ist die Vorwärmeinrichtung oberhalb des zumindest einen Reaktors vorgesehen, so dass ein Übertrag der vorgewärmten Biomasse in den Reaktor durch schwerkraftbedingtes Fallen erfolgen kann. Dadurch können Pumpen etc. zur Förderung der wässrigen Biomasse vermieden werden.

Besonders bevorzugt ist die Entnahmeeinrichtung zur Entnahme des Dehydratwassers aus einem mittleren Reaktorabschnitt ausgebildet, der zwischen dem oberen Reaktorabschnitt an dem die Aufgabe der Biomasse erfolgt einem unteren Reaktorabschnitt, an dem die Entnahme von Kohlenschlamm erfolgt, angeordnet ist. In diesem Bereich liegt während dem Karbonisierungsprozess eine Schicht von Dehydratwasser vor, sodass dieses beispielsweise durch eine Pumpeinrichtung oder durch den vorherrschenden Druckunterschied zwischen dem Reaktorinnenraum und der Vorwärmeinrichtung selbiger zugeführt werden kann.

In einem weiteren bevorzugten Ausführungsbeispiel sind zumindest zwei Reaktoren vorgesehen, wobei ein Auslass des ersten Reaktors mit dem Einlass des zweiten Reaktors verbunden ist. Dadurch entsteht eine kaskadierte Reaktoranordnung, wobei der Karbonisierungsprozess mit seinen unterschiedlichen Prozessstufen verteilt auf die unterschiedlichen Reaktoren abläuft und durch die fluidische Verbindung des Auslasses des ersten Reaktors mit dem Einlass des zumindest einen weiteren Reaktors ein Übertrag des Reaktionsprodukts der ersten Prozessstufe in den zumindest einen weiteren Reaktor erfolgen kann. Dieser Übertrag kann mittels Pumpeinrichtungen oder bevorzugt über Druckunterschiede zwischen den Reaktoren erfolgen.

Besonders bevorzugt ist dem Auslass, aus dem der durch den Karbonisierungsprozess entstehende Kohleschlamm ausgefördert wird, in Förderrichtung folgend eine Filtereinrichtung vorgesehen, mittels der eine Fremdstoffabscheidung bewirkt wird. Insbesondere kleinere Fremdstoffe, beispielsweise Kunststoffe oder Folien, werden durch die Hitzeeinwirkung im Reaktorinnenraum derart verklumpt, dass sie anschließend über die Filtereinrichtung einfach und kostengünstig ausfiltriert werden können. Die Filtereinrichtung kann insbesondere ein Kantenspaltfilter sein. Dadurch ist es nicht erforderlich, im Bereich der Biomasseaufgabe oder der Fördereinrichtung, die den Eintrag der Biomasse in die Vorwärmeinrichtung bewirkt, jegliche Fremdstoffe abzutrennen bzw. auszusortieren. Insbesondere die schwierig auszusortierenden, kleinen Fremdstoffe können in der Biomasse verbleiben und werden anschließend durch die Filtereinrichtung vom Kohleschlamm getrennt.

Unter Dehydratwasser im Sinne der Erfindung wird im Reaktor vorhandene Flüssigkeit verstanden, die durch der Biomasse beigemischte Flüssigkeit und/oder während des Dehydratationsprozesses von der Biomasse abgespaltene Wassermoleküle gebildet wird.

Weiterbildungen, Vorteile und Anwendungsmöglichkeiten der Erfindung ergeben sich auch aus der nachfolgenden Beschreibung des Ausführungsbeispiels und aus den Figuren.

Die Erfindung wird nachfolgend anhand eines Ausführungsbeispiels im Zusammenhang mit den Figuren näher erläutert. Es zeigen:
- Fig. 1: beispielhaft eine erfindungsgemäße Vorrichtung zur hydrothermalen Karbonisierung von Biomasse mit einem einzelnen Reaktor in einer schematischen Darstellung;
- Fig. 2: beispielhaft eine erfindungsgemäße Vorrichtung zur hydrothermalen Karbonisierung von Biomasse mit mehreren kaskadierten Reaktoren in einer schematischen Darstellung.

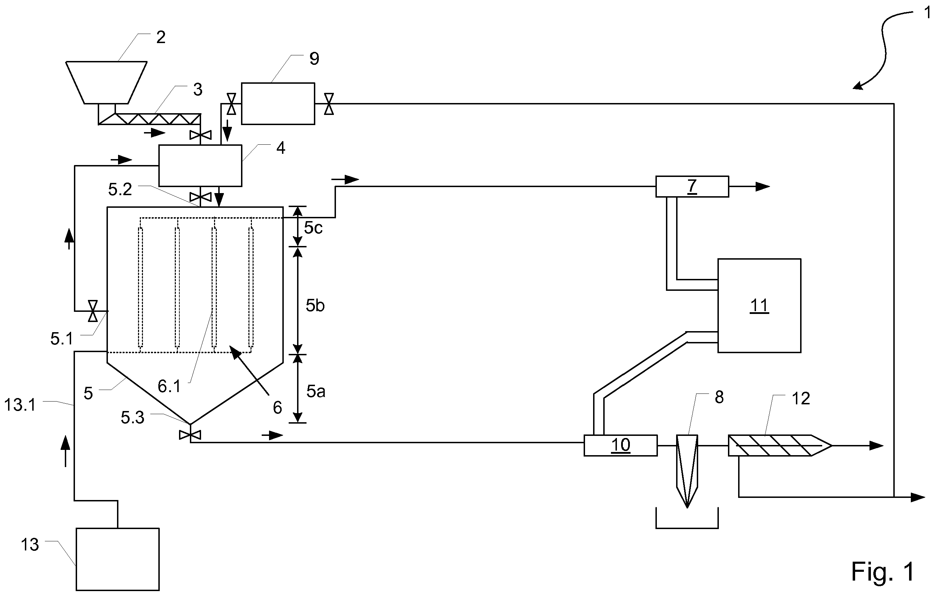

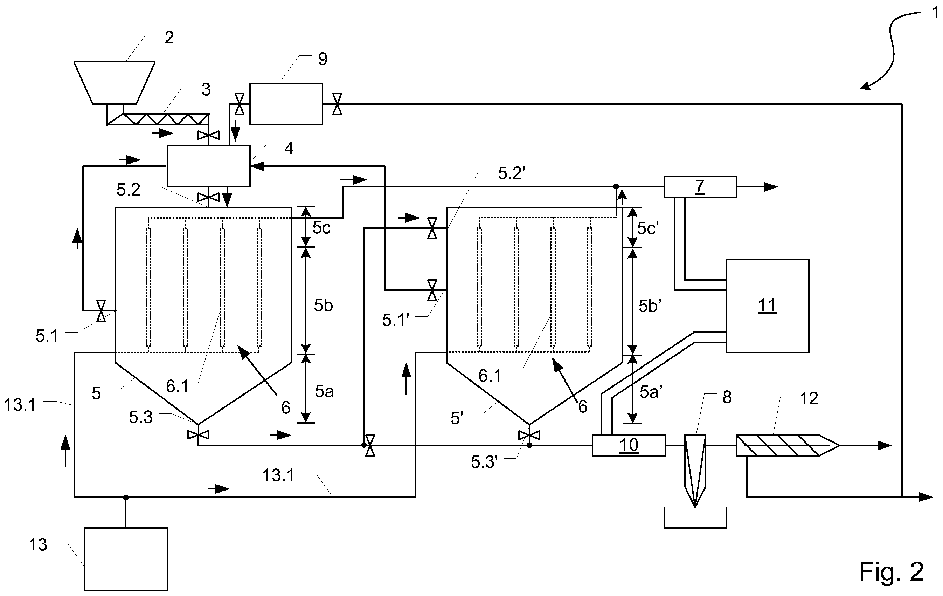

In den Figuren 1 und 2 sind mit dem Bezugszeichen 1 Anlagen zur hydrothermalen Karbonisierung (HTC) gezeigt. Die Anlage 1 ist hierbei zum Durchführen eines HTC-Verfahrens als Durchlaufverfahren ausgebildet, d.h., dass die Anlage 1 einen kontinuierlichen oder quasikontinuierlichen Betrieb beim Einbringen der Biomasse in den Reaktor bzw. bei der Entnahme der Kohle aus dem Reaktor 5, 5' ermöglicht, ohne dass der Karbonisierungsprozess im Reaktorinnenraum vollständig unterbrochen werden würde.

Die in der Anlage 1 verarbeitete Biomasse, die insbesondere trockene Biomasse mit einem Trockengehalt ≥ 30% sein kann, wird an einer Biomasseaufgabe 2 in die Anlage 1 eingebracht und mittels einer Fördereinrichtung 3 gesteuert bzw. zeitlich intermittierend der Vorwärmeinrichtung 4 zugeführt. Die Fördereinrichtung 3 kann hierbei eine Förderschnecke, ein Förderband, ein Schubbodenförderer oder bei Biomasse mit hohem Wasseranteil auch eine Pumpe sein. In der Vorwärmeinrichtung 4, die vorzugsweise ein druckfester, abgesehen von den Zu- und Ableitungen geschlossener Behälter ist, wird die Biomasse erwärmt, und zwar durch unmittelbares Einbringen des Dehydratwassers in die Biomasse und durch Vermischen des Dehydratwassers mit der Biomasse, wobei das Dehydratwasser zumindest teilweise durch Dehydratation im Reaktor 5, 5' entsteht. Dieses Wasser weist eine Temperatur im Bereich zwischen 180°C und 240°C auf und kann aufgrund seiner hohen spezifischen Masse optimal für einen Wärmeeintrag in die zuvor zu erwärmende Biomasse verwendet werden. Beim Zuführen des Dehydratwassers ist vorzugsweise die Vorwärmeinrichtung 4 druckdicht verschlossen.

Zur Entnahme des Dehydratwassers aus dem Reaktor 5, 5' ist vorzugsweise in zwischen dem oberen und dem unteren Reaktorabschnitt 5a, 5a', 5c, 5c' liegenden mittleren Reaktorabschnitt 5b, 5b' eine Entnahmeeinrichtung 5.1, 5.1' vorgesehen, über die das Dehydratwasser vorzugsweise über zumindest ein Ventil gesteuert entzogen werden kann und über eine unmittelbare fluidische Verbindung der Vorwärmeinrichtung 4 zugeführt werden kann.

Nach der zumindest teilweisen Vorwärmung der Biomasse wird vorzugsweise der Druck innerhalb der Vorwärmeinrichtung 4, der bereits durch die Zuführung des Dehydratwassers angestiegen ist, auf einen Druck zumindest gleich dem Druck im Inneren des Reaktors 5 erhöht, wobei Drücke von 10 bar bis 33 bar bevorzugt sind. Die Druckerhöhung erfolgt mittels eines Druckerzeugers 9 oder einem mit dem Druckerzeuger 9 gekoppelten Druckspeicher. Nach der Erhöhung des Drucks in der Vorwärmeinrichtung 4 wird die vorgewärmte Biomasse bzw. das Gemisch der Biomasse mit dem Dehydratwasser über den Einlass 5.2 dem Reaktor 5 zugeführt. Für den Fall, dass in der Vorwärmeinrichtung 4 der gleiche Druck wie im Reaktor 5 vorherrscht, wird die Biomasse schwerkraftbedingt in den Reaktor 5 eingebracht. Bevorzugt ist eine Erhöhung des Drucks in der Vorwärmeinrichtung 4 über den Druck im Reaktor 5, sodass ein Verstopfen des Auslasses der Vorwärmeinrichtung 4 bzw. des Einlasses 5.2 des Reaktors 5 wirksam vermieden wird.

Nach dem Einbringen der Biomasse in den Reaktor 5 wird diese Biomasse der hydrothermalen Karbonisierung unterzogen, wobei aus der Biomasse in dem Dehydratationsprozess Wassermoleküle abgespalten werden und dabei Kohlepartikel entstehen, die sich im unteren Reaktorabschnitt 5a ablagern.

Zur Erhöhung der Durchsatzrate der verarbeitbaren Biomasse ist es möglich, die Prozessstufen, die zur Karbonisierung der Biomasse führen, in mehreren, kaskadiert angeordneten Reaktoren 5, 5' zu vollziehen (Fig. 2). Hierbei ist der Auslass 5.3 des ersten Reaktors 5 mit dem Einlass 5.2' des zumindest einen weiteren Reaktors 5' verbunden, sodass ein erster Karbonisierungsteilprozess in dem ersten Reaktor 5 und ein weiterer Karbonisierungsteilprozess in dem zumindest einen weiteren Reaktor 5' vollzogen wird. Bei einer derart kaskadierten Anordnung der Reaktoren 5, 5' erfolgt die ausschließliche Entnahme des Kohleschlamms an dem Auslass 5.3' des weiteren Reaktors 5'.

Ferner ist bei dem Vorsehen mehrerer Reaktoren 5, 5' erfindungsgemäß auch vorgesehen, dass an dem zumindest einen weiteren Reaktor 5' ebenfalls eine Entnahmeeinrichtung 5.1' für Dehydratwasser vorgesehen ist, das ebenfalls der Vorwärmeinrichtung 4 zum Wärmeeintrag in die Biomasse zugeführt wird.

Bevorzugt werden der in den Reaktor eingebrachten Biomasse ebenfalls Katalysatoren beigefügt, die eine Versäuerung bzw. Alkalisierung der Biomasse bewirken, wobei durch den Grad der Zugabe derartiger Katalysatoren die Struktur der entstehenden Kohlepartikel bestimmt wird. Ferner kann durch geeignete Zugabe von Katalysatoren der Karbonisierungsprozess beschleunigt werden. Aus dem Auslass 5.3 des Reaktors 5, bzw. dem Auslass 5.3' des weiteren Reaktors 5' bei kaskadierten Reaktoren 5, 5' wird ein wässriger Kohleschlamm entnommen, der zur Restwärmeausnutzung über einen Wärmetauscher 10 geführt wird. Die Entnahme des Kohlenschlamms erfolgt hierbei vorzugsweise kontinuierlich, insbesondere gesteuert über den Füllstand in den Reaktoren 5, 5'. Über den Wärmetauscher 10 wird dabei dem Kohleschlamm zumindest teilweise die darin enthaltende Wärmeenergie entzogen. Diese Wärmeenergie wird einem Wärmespeicher 11 zugeführt, sodass der als Zwischenpuffer für die entzogene Wärmeenergie fungiert.

Der Kohleschlamm wird ferner über eine Filtereinrichtung 8 geführt, die vorzugsweise dem Wärmetauscher 10 nachgeschaltet vorgesehen ist, sodass der bereits zumindest größtenteils abgekühlte Kohleschlamm die Filtereinrichtung 8 durchfließt und dabei die im Kohleschlamm enthaltenden Fremdstoffe abgeschieden werden. Derartige Fremdstoffe können in der Biomasse enthaltene Kunststoffe, Metalle etc. sein. Vorzugsweise ist eine weitere Fremdstoffsortierung im Bereich der Biomasseaufgabe 2 oder der Fördereinrichtung 3 vorgesehen, mittels der grobe Fremdstoffe aus der zu verarbeitenden Biomasse aussortiert werden. Der durch die Filtereinrichtung 8 gefilterte Kohleschlamm wird einer Trocknungs- und Entwässerungseinrichtung 12 zugeführt, in der der Kohleschlamm in staubförmige Kohlepartikel bzw. in Kohlestaub umgewandelt wird. Dieser Kohlestaub kann entweder direkt in ein Vorratslager eingeblasen oder einer Pelletiereinrichtung zugeführt werden, in der die Kohlepartikel durch Zugabe von Stärke, insbesondere von Mais und/oder Kartoffelstärke vernetzt und in Pellets verpresst wird.

Die beim Entwässerungsvorgang entstehende Flüssigkeit kann abhängig von der verwendeten Biomasse entweder direkt als Dünger verwendet werden oder bei Verwendung von phosphathaltiger bzw. schwermetallhaltiger Biomasse ausgefällt und abfiltriert werden, sodass diese Phosphate und Schwermetalle zumindest größtenteils aus der Flüssigkeit entfernt werden. Ein Teil der mittels der Trocknungs- und Entwässerungseinrichtung 12 aus dem Kohlenschlamm entzogenen Flüssigkeit kann prozessintern weiterverwendet und dem Druckerzeuger 9 zugeführt werden, sodass die Flüssigkeit zur Druckerhöhung in der Vorwärmeinrichtung 4 verwendet werden kann.

Bevorzugt ist die die Anlage 1 mit einer Heizeinrichtung 13 verbunden, die beispielsweise ein Biomasseofen, ein Blockheizkraftwerk oder eine fossilen Brennstoff benutzende Heizeinrichtung sein kann. Die aus der Heizeinrichtung 13 entstehenden Gase, insbesondere Rauchgase werden dem Reaktor 5 bzw. den Reaktoren 5, 5' über Rauchgasleitungen 13.1 zugeführt. Im Inneren der Reaktoren 5, 5' ist jeweils zumindest ein Wärmetauscher 6 vorgesehen, der insbesondere ein Rohrwärmetauscher ist und mehrere vorzugsweise vertikal angeordnete Rohrelemente 6.1 aufweist, die mit den Rauchgasleitungen 13.1 verbunden sind und vom Rauchgas durchströmt werden. Dadurch wird eine Erwärmung der im Reaktorinneren enthaltenen Biomasse bzw. Flüssigkeit bewirkt. Nach dem Durchströmen des Wärmetauschers 6 werden die Rauchgase aus den Reaktoren 5, 5' geführt und vorzugsweise einem Wärmetauscher 7 zugeführt, mittels dem dem Rauchgas Restwärmeenergie entzogen wird und dem Wärmespeicher 11 zugeführt wird.

Bevorzugt ist in den Rauchgasleitungen 13.1 zwischen der Heizeinrichtung 13 und den Reaktoren 5, 5' eine Mischeinrichtung vorgesehen, die eine Vermischung des Rauchgases mit einer gesteuerten Menge Kaltluft bzw. Frischluft ermöglicht. Dadurch wird die Rauchgastemperatur bzw. der Wärmeeintrag in die Reaktoren 5, 5' über den Wärmetauscher 6 gesteuert. Der benötigte Wärmeeintrag in die Reaktoren 5, 5' hängt maßgeblich von der verwendeten Biomasse bzw. dem Trockenanteil dieser Biomasse ab, wobei Biomasse mit einem höheren Trockenanteil einen geringeren Wärmeeintrag benötigt als Biomasse mit einem erhöhten Trockenanteil. Durch die gesteuerte Zuführung von Rauchgas kann dem jeweiligen benötigten Wärmebedarf abhängig von der bearbeiteten Biomasse Rechnung getragen werden.

### Bezugszeichenliste

- 1: HTC-Anlage
- 2: Biomasseaufgabe
- 3: Fördereinrichtung
- 4: Vorwärmeinrichtung
- 5, 5': Reaktor
- 5a, 5a': unterer Reaktorabschnitt
- 5b, 5b': mittlerer Reaktorabschnitt
- 5c, 5c': oberer Reaktorabschnitt
- 5.1, 5.1': Entnahmeeinrichtung
- 5.2, 5.2': Einlass
- 5.3, 5.3': Auslass
- 6: Wärmetauscher
- 6.1: Rohrelement
- 7: Wärmetauscher
- 8: Filtereinrichtung
- 9: Druckerzeuger
- 10: Wärmetauscher
- 11: Wärmespeicher
- 12: Trocknungs- und Entwässerungseinrichtung
- 13: Heizeinrichtung
- 13.1: Rauchgasleitung

## Patentansprüche

1. Vorrichtung zur hydrothermalen Karbonisierung von Biomasse im Durchlauf, mit einer Fördereinrichtung (3) für Biomasse zu einer Vorwärmeinrichtung (4), in der die Biomasse erwärmt wird, mit zumindest einem Reaktor (5), in dem die Biomasse dehydratisiert und karbonisiert wird, **dadurch gekennzeichnet, dass** der Reaktor (5) einen in dem die Biomasse aufnehmenden Innenraum des Reaktors (5, 5') angeordneten Wärmetauscher (6) aufweist, der zur Durchleitung von Rauchgasen oder Wasserdampf ausgebildet ist, wobei es sich bei dem Wärmetauscher (6) um einen Rohrwärmetauscher mit mehreren vertikal angeordneten Rohrelementen (6.1) handelt.

2. Vorrichtung nach Anspruch 1, **dadurch gekennzeichnet, dass** am Reaktor (5, 5') eine Entnahmeeinrichtung (5.1, 5.1') für durch die Dehydratation entstehendes Dehydratwasser vorgesehen ist und dass die Entnahmeeinrichtung unmittelbar (5.1, 5.1') fluidisch mit der Vorwärmeinrichtung (4) verbunden ist.

3. Vorrichtung nach Anspruch 2, **dadurch gekennzeichnet, dass** die Vorwärmeinrichtung (4) durch eine druckdicht verschließbare Kammer gebildet ist, die vorzugsweise oberhalb des zumindest einen Reaktors (5, 5') vorgesehen ist.

4. Vorrichtung nach einem der Ansprüche 1 bis 3, **dadurch gekennzeichnet, dass** zumindest zwei Reaktoren (5, 5') vorgesehen sind, wobei ein Auslass (5.3) des ersten Reaktors (5) mit dem Einlass (5.2') des zweiten Reaktors (5') verbunden ist.

5. Vorrichtung nach einem der Ansprüche 1 bis 3, **dadurch gekennzeichnet, dass** zumindest zwei Reaktoren (5, 5') vorgesehen sind und dass die Reaktoren (5, 5') derart ausgebildet und miteinander gekoppelt sind, dass in den Reaktoren (5, 5') jeweils bestimmte Prozessstufen der hydrothermalen Karbonisierung vollzogen werden.

6. Vorrichtung nach einem der Ansprüche 1 bis 5, **dadurch gekennzeichnet, dass** in Förderrichtung nach dem Auslass (5.3, 5.3') des Reaktors (5, 5') eine Filtereinrichtung (8) zur Fremdstoffabscheidung vorgesehen ist.

## Claims

1. A device for the hydrothermal carbonization of biomass during throughput, having a device for conveying (3) biomass to a preheating device (4) in which the biomass is heated, having at least one reactor (5) in which the biomass is dehydrated and carbonized, **characterized in that** the reactor (5) comprises a heat exchanger (6) arranged in the internal space of the reactor (5, 5') receiving the biomass, which heat exchanger is designed for the conveyance of flue gases or steam, wherein the heat exchanger (6) is a tubular heat exchanger comprising a plurality of vertically arranged tubular elements (6.1).

2. The device according to claim 1, **characterized in that** an extraction device (5.1, 5.1') for dehydration-water produced by dehydration is provided at the reactor (5, 5') and that the extraction device is directly (5.1, 5.1') connected fluidically to the preheating device (4).

3. The device according to claim 2, **characterized in that** the preheating device (4) is formed by a chamber that can be closed in a pressure-tight manner which is preferably provided above the at least one reactor (5, 5').

4. The device according to one of claims 1 to 3, **characterized in that** at least two reactors (5, 5') are provided, wherein an outlet (5.3) of the first reactor (5) is connected to the inlet (5.2') of the second reactor (5').

5. The device according to one of claims 1 to 3, **characterized in that** at least two reactors (5, 5') are provided and that the reactors (5, 5') are configured and coupled with one another in such a manner that certain process steps of the hydrothermal carbonization are carried out in the respective reactors (5, 5').

6. The device according to one of claims 1 to 5, **characterized in that** a filter mechanism (8) for the separation of foreign substances is provided downstream of the outlet (5.3, 5.3') of the reactor (5, 5') in the conveying direction.

## Revendications

1. Dispositif destiné à la carbonisation hydrothermale de biomasse au passage, comprenant un système de convoyage (3) de la biomasse vers un système de préchauffage (4) dans lequel la biomasse est chauffée, comprenant au moins un réacteur (5), dans lequel la biomasse est déshydratée et carbonisée, **caractérisé en ce que** le réacteur (5) comporte un échangeur thermique (6) placé dans l'espace intérieur du réacteur (5, 5') accueillant la biomasse, qui est conçu pour l'acheminement de gaz de fumée ou de vapeur d'eau, sachant que l'échangeur thermique (6) est un échangeur thermique tubulaire, doté de plusieurs éléments tubulaires (6.1) placés à la verticale.

2. Dispositif selon la revendication 1, **caractérisé en ce que** sur le réacteur (5, 5'), il est prévu un système de prélèvement (5.1, 5.1') de l'eau de déshydratation produite par la déshydratation et **en ce que** le système de prélèvement est directement (5.1, 5.1') relié fluidiquement avec le système de préchauffage (4).

3. Dispositif selon la revendication 2, **caractérisé en ce que** le système de préchauffage (4) est formé par une chambre pouvant se fermer de manière étanche à la pression, qui est prévue de préférence au-dessus de l'au moins un réacteur (5, 5').

4. Dispositif selon l'une quelconque des revendications 1 à 3, **caractérisé en ce qu'**au moins deux réacteurs (5, 5') sont prévus, une sortie (5.3) du premier réacteur (5) étant reliée avec l'entrée (5.2') du deuxième réacteur (5').

5. Dispositif selon l'une quelconque des revendications 1 à 3, **caractérisé en ce qu'**au moins deux réacteurs (5, 5') sont prévus et **en ce que** les réacteurs (5, 5') sont conçus et couplés les uns aux autres de telle sorte que dans les réacteurs (5, 5') soient accomplis chaque fois des étapes de processus déterminées de la carbonisation hydrothermale.

6. Dispositif selon l'une quelconque des revendications 1 à 5, **caractérisé en ce que** dans la direction de convoyage, en aval de la sortie (5.3, 5.3') du réacteur (5, 5'), il est prévu un système de filtration (8) pour la séparation des corps étrangers.
